(19) Europäisches Patentamt
European Patent Office
Office européen des brevets

(11) **EP 3 879 500 A1**

(12) **EUROPEAN PATENT APPLICATION**

(43) Date of publication:
**15.09.2021 Bulletin 2021/37**

(51) Int Cl.:
***G06T 19/00*** *(2011.01)*

(21) Application number: **21161629.7**

(22) Date of filing: **09.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2020 US 202016814722**

(71) Applicant: **Gulfstream Aerospace Corporation Savannah, Georgia 31402 (US)**

(72) Inventor: **HAUSMANN, Jeffrey Savannah, Georgia 31402 (US)**

(74) Representative: **LKGlobal UK Ltd. Cambridge House Henry Street Bath BA1 1BT (GB)**

(54) **VIRTUAL CAMERA SYSTEM FOR AIRCRAFT**

(57) The virtual camera system supplies terrain views to occupants of an aircraft, by employing a virtual reality image generator, disposed on the aircraft, that generates a terrain display image corresponding to a perspective based on supplied position data. At least one aircraft position sensor disposed on the aircraft supplies actual aircraft position as a position data to the virtual reality image generator. A display device disposed on the aircraft and coupled to the virtual reality image generator to reproduce the terrain display image for viewing by passengers within the aircraft. The image generator includes processor programmed to generate the terrain display image using actual aircraft latitude and longitude relative to the Earth and further using a synthetic altitude that differs from the actual aircraft altitude. The synthetic altitude is used above actual aircraft altitudes of a predetermined threshold; otherwise the actual aircraft altitude is used.

Fig. 5

EP 3 879 500 A1

**Description**

TECHNICAL FIELD

The disclosure relates generally to aircraft camera systems and viewing systems to allow passengers within the aircraft to enjoy views of the ground below and views of the aircraft in its environment.

BACKGROUND

Aircraft passengers enjoy looking out the cabin windows and also enjoy viewing the aircraft's *en route* flight progress on display monitors. These are standard aircraft features. Some aircraft are additionally outfitted with external fore and aft video cameras to provide passengers with views of the runway during takeoff and landing and views looking downward while the aircraft is in flight. Typically these video cameras capture images that are displayed on display monitors within the cabin, often the same monitors used to display *en route* flight progress.

Unfortunately, viewing perspectives of both cabin windows and external video monitors are limited; and when the aircraft is flying at night or when the aircraft is over weather, there may be little or nothing of interest to see. Moreover, when the aircraft is at cruising altitude, the ground is so far away that very little detail can be seen.

Increasing resolution of the in-cabin display monitors is no practical solution, because camera resolution is the limiting factor. It is not commercially practical to constantly upgrade camera resolution to match the display resolution, because each camera upgrade will typically requires an extensive regulatory process.

Monitor resolution actually presents another problem, as well. Passengers have come to expect ever higher and higher display resolutions, to match the resolutions produced by the latest mobile phones and high definition home entertainment systems. With each iterative resolution increase in consumer electronic displays, the images from aircraft-mounted legacy video cameras just seem to get worse and worse by comparison.

SUMMARY

Disclosed here is a new approach, which gives aircraft passengers a much higher resolution and more flexible view of both the ground below and the aircraft in its environment. Instead of using aircraft-mounted video cameras, the disclosed system uses a virtual reality image synthesis system coupled to an on-board database containing previously captured, photo-realistic images of the ground below the aircraft's current position.

The virtual reality system offers passengers the ability to view the ground and the aircraft's environment from a full range of different perspectives, including a synthesized composite view showing a synthesized rendering of the actual aircraft as seen from the outside looking in-as the aircraft would appear to another aircraft flying beside, above or below it.

One advantage of the virtual reality system stems from the fact that the field of view provided to the passenger is physically decoupled from the actual altitude at which the aircraft is flying. For example, when flying at a cruising altitude of 40,000 feet, the virtual reality system can be programmed to supply an image of the ground, as it would appear at an altitude of 5000 feet. In presenting this perspective, the virtual reality system takes the aircraft's actual position and ground speed into account, so that objects directly beneath the physical aircraft will always be presented directly beneath the aircraft as rendered in virtual reality space.

This ability to decouple cruising altitude from the rendered virtual image is something quite foreign to aircraft-mounted video camera systems, where the perspective of the video camera is always tied to the actual altitude of the plane because the camera and its lens system are physically attached to the underside of the aircraft.

In the disclosed system, if desired, the passenger can control the virtual reality system to request a view showing where the aircraft was previously located, or where the aircraft will (or could be) located in the future.

In one aspect, the disclosed virtual camera system supplies terrain views to occupants of an aircraft, using a virtual reality image generator disposed on the aircraft. The image generator generates a terrain display image corresponding to a perspective based on supplied position data. The virtual camera system further includes an aircraft position sensor disposed on the aircraft and coupled to supply position data to the virtual reality image generator. A display device disposed on the aircraft is coupled to the virtual reality image generator to reproduce the terrain display image for viewing by passengers within the aircraft.

The virtual reality image generator includes a processor that may be programmed to generate the terrain display image using actual aircraft latitude and longitude relative to the Earth and further using a synthetic altitude that differs from the actual aircraft altitude. In some embodiments, the synthetic altitude is used above actual aircraft altitudes of a predetermined threshold. When below the threshold, the processor uses the actual aircraft altitude.

BRIEF DESCRIPTION OF THE DRAWINGS

The drawings described herein are for illustrative purposes only of selected embodiments and not all possible implementations. Thus the particular choice of drawings is not intended to limit the scope of the present disclosure.

Fig. 1 is a perspective view of an aircraft, illustrating different prior art video camera mounting positions.

Fig. 2 is a diagram illustrating exemplary camera views from a prior art, downwardly directed belly-mounted video camera at different altitudes.

Fig. 3 is a block diagram of a system implementation of the disclosed virtual camera system.

Fig. 4 is an illustration useful in explaining how the image data are processed by the virtual image processor.

Fig. 5 is a flowchart diagram with associated virtual perspective view, useful in understanding how the virtual image processor generates the image for viewing on the display.

Figs. 6 provide exemplary views at different altitudes, illustrating different virtual views provided by the disclosed virtual system.

DETAILED DESCRIPTION

The following detailed description is merely exemplary in nature and is not intended to limit the invention or the application and uses of the invention. Furthermore, there is no intention to be bound by any theory presented in the preceding background of the invention or the following detailed description.

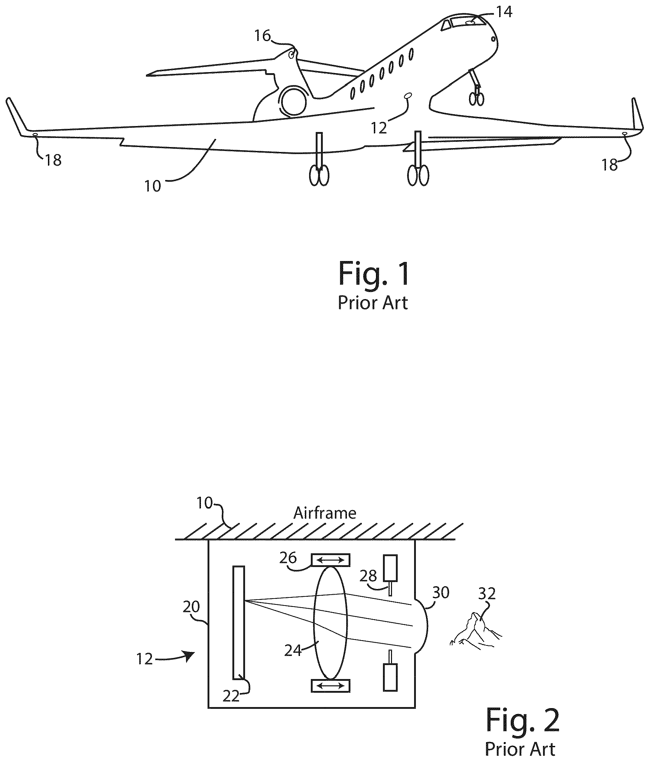

The disclosed virtual camera system offers a viewing experience that is greatly improved over the conventional video camera system. To put these improvements in context, an understanding of the conventional video camera system is helpful. Therefore, refer to Fig. 1 which illustrates the basic nature of the conventional system.

In the conventional video camera system one or more video cameras are mounted at predefined locations on the aircraft 10, so that such cameras have a view of the ground or airspace, usually from a fixed vantage point. Such cameras are position to give passengers either a view of the runway during takeoff or landing, or a bird's-eye view of the ground beneath the aircraft during flight.

Fig. 1 illustrates a number of common mounting locations, namely: belly-mounted 12, sun shield-mounted 14, tail-mounted 16 (atop vertical stabilizer), and wing-mounted 18. Normally, cameras will be installed at only one or two of these locations, as most locations provide essentially the same view. Some video cameras may have a fixed pointing direction and fixed focal length, while other cameras may have pan-tilt-zoom features. In all cases, however, the focal plane of the camera will be physically referenced to a fixed location on the aircraft. In other words these conventional camera systems are mounted to the airframe, or to a structure carried by the airframe. Thus the camera's vantage point is physically tied to the airframe.

The physical nature of the connection between airframe and conventional camera is shown in Fig. 2, which depicts an exemplary conventional video camera, such as a belly-mounted camera 12 having a camera body that is physically attached to a portion of the airframe 10. The camera consists of an electronic image sensor 22 with lens 24 that focuses light received through viewing window 30. In this way an optical image of an object such as a region of terrain 32 illuminates the electronic sensor, which in turn delivers an electronic signal to a viewing monitor (not shown). The camera includes a motorized lens focusing system 26 and motorized adjustable aperture 28, which are electronically controlled to bring the image into focus and control the exposure by adjusting the aperture.

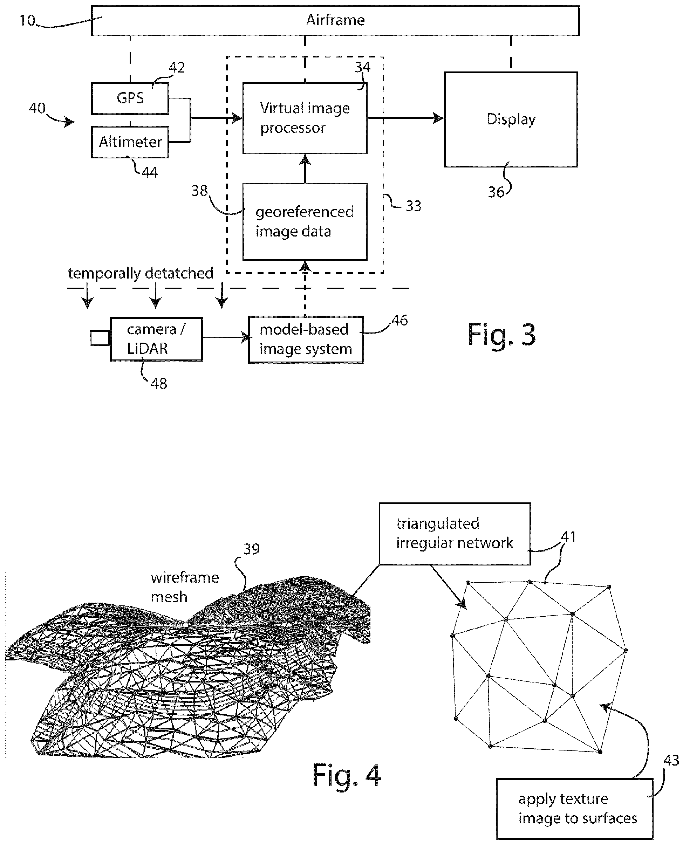

The disclosed virtual camera system is shown in Fig. 3. At the heart of the system is a virtual reality image generator system 33, comprising a virtual image processor 34 and an associated georeferenced image data store 38. The data store 38 preferably stores model-based image data for all areas of terrain over which the aircraft will fly. With a memory of sufficiently large capacity, the data store 38 may store image data for the entire surface of the Earth, and for different seasons of the year. In this regard, there are virtual databases available that will account for the changing seasons, e.g. winter and summer. A user may want to fly with a season-appropriate database for a closer match between what they see out the side window and what is shown in the virtual camera system.

In its default operating state, the virtual image processor generates an image for presentation on display 36 based on the aircraft's current location in three-dimensional space (e.g., latitude-longitude-altitude). To supply the virtual image processor with the current aircraft location, suitable data connections are provided to the aircraft's location sensor system, which will typically include GPS receiver 42 and altimeter 44.

The aforementioned components of the virtual camera system, the virtual reality image generator system 33, virtual image processor 34, display, georeferenced image data store 38, and the aircraft location sensor system 40, are physically carried by the airframe 10.

The georeferenced image data store 38 is preferably prepopulated (e.g., uploaded or installed prior to flight) with model-based image data files produced by a model-based image system 46, which generates the model-based image data using images of actual Earth terrain captured by a suitable camera/ LiDAR system 48. Notably, the model-based image system 46 and camera / LiDAR 48 do not need to be carried by the airframe 10. Indeed, in the illustrated embodiment, the camera / LiDAR 48 and model-based image system 46 are physically and temporally detached from the airframe. In this context, temporal detachment refers to the fact that the image capture by camera / LiDAR 48 and processing by the model-based image system 46 all occur prior to the aircraft flight. Indeed, the image capture and processing need not bear any direct relationship to the aircraft flight at all. All that is required by the virtual image processor 34 are image data suitable for generating a high resolution images for display that are referenced to particular latitude-longitude locations on the Earth.

In one embodiment, the georeferenced image data are constructed using wireframe or mesh models of the surface of the Earth and/or other structures, which define plane surfaces to which a high resolution photographic image is associated. Together the collection of these plane surfaces comprise a photorealistic image of a particular location on the Earth's surface, a waypoint or point of interest or other structure or physical feature. Any of a number of different photogrammetry techniques can be used. Each of the plane surfaces, or at least a cluster of plane surfaces, has associated with it a geotag, identifying the corresponding location on the Earth's surface or structure that portion of the composite image.

Fig. 4 illustrates one embodiment for how the virtual images can be composed as a model-based wireframe mesh 39 made up of polygonal surfaces, such as triangles that define a triangulated irregular network (TIN) 41 to which texture images 43 are applied to the polygonal surfaces. Nodes of the triangulated irregular network may be georeferenced to latitude-longitude positions on the Earth to comprise the georeferenced image data. Such virtual images may be constructed using aerial photogrammetry techniques to develop georeferenced image data that are stored in data sets suitable for storage in computer-readable storage memory. Such data sets are commercially available from sources such as Vricon Systems Aktiebolag, Linkoeping, Sweden.

One major advantage of using wireframe mesh models is that images can be scaled larger or smaller by simply proportionally increasing the dimensions of the polygonal surfaces (triangles) while retaining an appropriately high resolution of the applied texture images applied to the surfaces.

The output of the model-based image system 46 can be expressed in a variety of different formats, including point clouds, 3D building models, digital elevation models, geospatially corrected aerial images, planemetric feature models (road edges, building footprints, etc.) topographic, terrain and contour maps and volumetric survey data.

Processing the virtual images for in-flight display

In one embodiment, the virtual image processor is designed to provide image content for in-flight display that exceeds the natural viewing resolution of the naked eye. Specifically, the processor can provide a display while the aircraft is at high altitude (e.g., 40,000 feet) that appears as if the aircraft were at 5,000 feet. Alternatively, the processor can provide an out-of-body view of the aircraft in its environment, as if seen from above, below or aside the plane. Such out-of-body perspective may be angled midway between horizontal and vertical, showing a side view of the plane and also features on the ground that are visible from that vantage point.

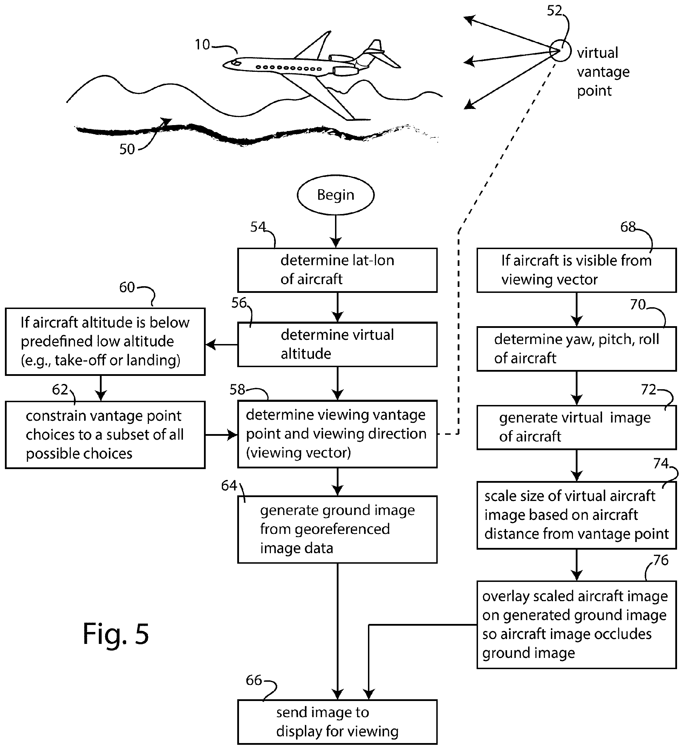

With reference to Fig. 5, aircraft 10 is flying above terrain 50, and the virtual image processor 34 has been set to display the aircraft and terrain below, from a virtual vantage point 52 positioned and oriented to view the aircraft from its port side, a moderate distance above the aircraft. In this exemplary view the aircraft is performing a banking turn, so that both wings and the top of the fuselage will be visible.

To generate this view, the processor 34 is programmed to first determine the latitude and longitude of the aircraft, as at 54. The latitude and longitude provide the virtual image processor 34 (Fig. 3) with a location or position reference that is used to retrieve the appropriate georeferenced image data 38 (Fig 3). From this data the processor 34 assembles and scales the ground image, providing high resolution content for viewing on the display 36 (Fig. 3). As part of the image data manipulation, processor 34 must scale the size of the image so that it will appear at an appropriate viewing size according to the desired display altitude. Thus the processor at step 56 determines a virtual altitude to be used for scaling.

As discussed previously, with a conventional aircraft-mounted camera, the viewing altitude is always the actual altitude of the aircraft-and this is so because the camera's lens and sensor 22 are physically attached to the aircraft. However, in the disclosed virtual camera system, the altitude can be selected artificially by the processor at whatever virtual viewing altitude the user requires. Selection of the virtual viewing altitude can be made directly by the user, through manipulation of controls associated with the display 36, or the processor can automatically select the virtual viewing altitude using a preprogrammed algorithm, which can be optionally overridden by the passenger or pilot.

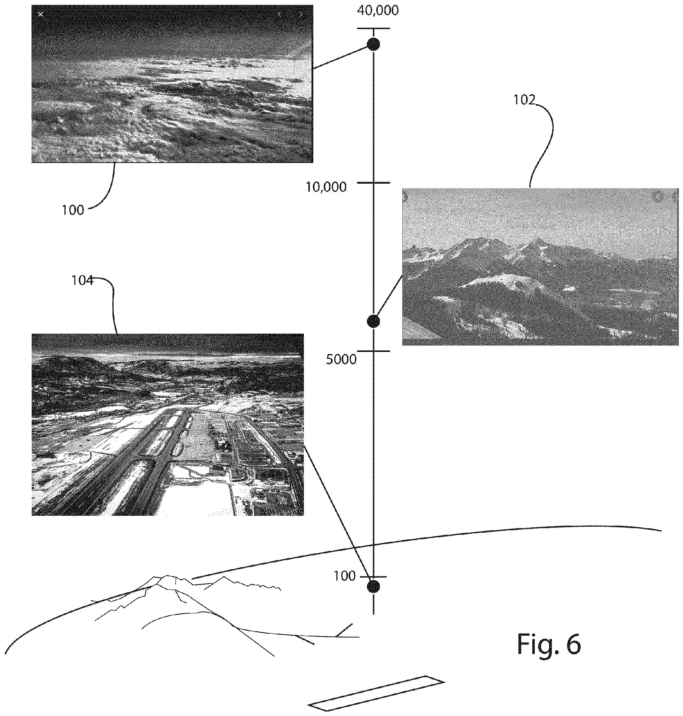

Fig. 6 illustrates examples of different possible views that can be generated using the disclosed system. As depicted at 100, when the aircraft is flying at its high cruising altitude, such as at or near 40,000 feet, the actual image as taken from a conventional camera system, or as seen through the aircraft window, might be thick cloud cover. However, the disclosed virtual camera system might present a synthesized display resembling that depicted at 102. The image at 102 resembles what would actually be seen at a much lower altitude than the aircraft is actually flying. As the aircraft loses altitude for landing, its actual altitude will eventually equal the altitude that matches the virtual image at 102. When such condition exists, the processor will display the synthesized image at 102. As the aircraft descends lower, the processor supplies a virtual image showing a more detailed view of the runway, as at 104.

In one embodiment, the processor selects a virtual viewing altitude to match the actual aircraft altitude so long as the aircraft is flying below a predetermined threshold. If this threshold is set at 5000 feet (for example), then the processor will use the actual aircraft altitude as the virtual altitude up to 5000 feet. At altitudes above the 5000 foot threshold the processor will continue to use a virtual altitude of 5000 feet. Thus, when flying at 40,000 feet, the processor will generate a displayed image of the ground as seen from 5000. Of course, the altitude threshold can be set at a different value if required. In this embodiment the virtual altitude is related to the actual altitude through a discontinuous function, such as unit step function:

$$Vz(z) = \begin{cases} z, Vz \leq c \\ c, Vz > c \end{cases} \qquad \text{Eq. 1}$$

where $Vz$ is the virtual altitude; $z$ is the actual aircraft altitude and $c$ is the predetermined threshold

In another embodiment, rather than use a unit step function, the processor applies a different form of discontinuous function which applies graph-compression to altitudes above the threshold. This can be done, for example, by multiplying altitudes above the threshold by a constant between 0 and 1 and adding this product to the threshold. Such processing will scale the displayed image so that at aircraft altitudes below the threshold (e.g., below 5000 feet) will be accurately represented and at altitudes above the threshold will be compressed.

$$Vz(z) = \begin{cases} z, Vz \leq c \\ mz + c, Vz > c \end{cases} \qquad \text{Eq. 2}$$

where $Vz$ is the virtual altitude; $z$ is the actual aircraft altitude; $c$ is the predetermined threshold and $m$ is a multiplier of value between 0 and 1.

Database Resolution Considerations

The resolution of the aircraft display system will influence the database resolution requirements. The ability to host the database may drive the maximum resolution that the aircraft is capable of displaying, assuming the aircraft has some limit on the amount of on-board storage available. For aircrafts that are capable of flying anywhere in the world, the system generally will need to host a global version of the virtual world.

For takeoff, landing, and the 'virtual low level' views where the virtual camera is close to the ground, the demand on the graphics processing unit (GPU) of the virtual image processor will be the highest as the scene will potentially be rapidly changing and the rendering will need to be correspondingly faster. This will need to be taken into consideration in determining the technical requirements for the GPU. This may be balanced, particularly for takeoff and landing, by restricting the allowable virtual perspectives because for many people, looking straight down during takeoff and landing can be disorienting and something to be avoided. Restricting this perspective would ease the demand on the GPU without depriving users of the more interesting views.

As demonstrated from the foregoing, the disclosed virtual camera system affords aircraft passengers with an engaging, high resolution view of the terrain during flight. Such view can be augmented, if desired, by including a realistic view of the aircraft. Under normal operation, the view provided by the virtual camera system is associated with the actual location of the aircraft relative to the ground below; however, the apparent altitude of the virtual image may be adjusted to give the viewer a much closer view of the ground, as if the aircraft altitude were much lower. Thus the virtual image is made to appear magnified, as if viewing through a telephoto lens, but without any optical distortion. Such magnification is made possible because the virtual image is digitally scaled by the virtual image processor by scaling the size of the triangles forming the triangulated irregular network.

Compared with images from conventional video cameras, the images produced by the virtual camera system are strikingly realistic. There is no blurring or optical distortion which often accompanies conventional camera systems which are necessarily exposed to the weather. Unlike conventional camera systems, the virtual camera system provides views of the ground that are not reduced to microscopic size due to high altitude, nor occluded by clouds. These benefits result from the fact that the camera / LiDAR system 48 (Fig. 3) used to develop the model-based images is detached from the aircraft both physically and temporally. Thus the images obtained by the camera / LiDAR system 48 are captured under optimal viewing conditions, converted into georeferenced image data, and supplied to the virtual image processor 34 (Fig. 3) for viewing at a later time by passengers within a different aircraft.

Such viewing experience is not a real-time viewing experience, because the images were captured in the past.

However, giving up the real-time experience, passengers are rewarded with a much more visually stimulating, high resolution view of the Earth and structures erected thereon. Moreover, the passengers can manipulate the perspective of their viewing experience using convenient user-interface controls associated with the display 36 (Fig. 3). They can manipulate the virtual vantage point 52 (Fig. 5) to different positions relative to the aircraft fuselage. If they wish, then can also override the latitude-longitude supplied by the system (as at step 54 Fig. 5) through user interface control, to move the aircraft's virtual position to a different location on the Earth, such as to their destination city, or even to the vacation chalet where they will be staying. All of these user-controlled vantage points generate the same visually stimulating, high resolution views.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment as contemplated herein. It should be understood that various changes may be made in the function and arrangement of elements described in an exemplary embodiment without departing from the scope of the invention as set forth in the appended claims.

## Claims

1. A virtual camera system for supplying terrain views to occupants of an aircraft, comprising:

   a virtual reality image generator disposed on the aircraft that generates a terrain display image corresponding to a perspective based on supplied position data;
   an aircraft position sensor disposed on the aircraft and coupled to supply position data to the virtual reality image generator;
   a display device disposed on the aircraft and coupled to the virtual reality image generator to reproduce the terrain display image for viewing by passengers within the aircraft.

2. The virtual camera system of claim 1, wherein the virtual reality image generator includes a processor programmed to generate the terrain display image using actual aircraft latitude and longitude relative to the Earth and further using a synthetic altitude that differs from the actual aircraft altitude.

3. The virtual camera system of claim 2 wherein the processor is programmed to use the synthetic altitude when the actual aircraft altitude is above a predetermined threshold.

4. The virtual camera system of any one of claims 1-3, wherein the virtual reality image generator includes a processor programmed to generate the terrain display image using actual aircraft latitude and longitude relative to the Earth and further using actual aircraft altitude.

5. The virtual camera system of any one of claims 1-4, wherein the virtual reality image generator includes a processor programmed to generate the terrain display image using actual aircraft latitude and longitude relative to the Earth and further using actual aircraft altitude when the aircraft is below a predetermined altitude.

6. The virtual camera system of any one of claims 1-5, wherein the virtual reality image generator uses stored georeferenced image data to construct model-based terrain display images.

7. The virtual camera system of claim 6 wherein the georeferenced image data are uploaded to the virtual reality image generator for use in generating terrain display images for a plurality of different flights by the aircraft.

8. The virtual camera system of any one of claims 1-7, wherein the virtual reality image generator includes a processor programmed to display a virtual image of the aircraft overlaid upon the terrain display image to give a displayed collective view of the aircraft and the terrain from a virtual perspective outside and looking towards the aircraft.

9. The virtual camera system of claim 8 wherein the processor is programmed to determine at least one of yaw, pitch and roll orientations of the aircraft relative to the Earth and generate the virtual image of the aircraft using the at least one of yaw, pitch and roll orientations to generate the virtual image of the aircraft.

10. The virtual camera system of any one of claims 1-9, wherein the virtual reality image generator includes a processor programmed to generate the terrain display image corresponding to a virtual vantage point supplied as a parameter to the processor.

11. The virtual camera system of any one of claims 1-10, wherein the virtual reality image generator includes a processor programmed to generate the terrain display image corresponding to a virtual vantage point supplied by an occupant of the aircraft.

12. The virtual camera system of any one of claims 1-11, wherein the virtual reality image generator includes a processor programmed to generate the terrain display image corresponding to a virtual vantage point selected from a predetermined set of vantage point options managed by the processor.

13. The virtual camera system of claim 12 wherein the processor is programmed to ascertain the altitude of the aircraft and to utilize a subset of the predetermined set of vantage points when the altitude is below a predetermined threshold.

14. The virtual camera system of any one of claims 1-13, wherein the virtual reality image generator includes a processor programmed to generate the terrain image using a discontinuous function that causes the generated terrain display image to be magnified for aircraft altitudes above a predetermined threshold.

Fig. 1
Prior Art

Airframe

Fig. 2
Prior Art

10 — Airframe

40 →

42 — GPS

Altimeter
44

34 — Virtual image processor

38 — georeferenced image data

33

Display

36

temporally detatched

camera / LiDAR
48

model-based image system — 46

## Fig. 3

39 — wireframe mesh

triangulated irregular network — 41

43 — apply texture image to surfaces

## Fig. 4

10

50

52

virtual
vantage
point

**Begin**

54
determine lat-lon
of aircraft

56
determine virtual
altitude

60
If aircraft altitude is below
predefined low altitude
(e.g., take-off or landing)

62
constrain vantage point
choices to a subset of all
possible choices

58
determine viewing vantage
point and viewing direction
(viewing vector)

64
generate ground image
from georeferenced
image data

68
If aircraft is visible from
viewing vector

70
determine yaw, pitch, roll
of aircraft

72
generate virtual image
of aircraft

74
scale size of virtual aircraft
image based on aircraft
distance from vantage point

76
overlay scaled aircraft image
on generated ground image
so aircraft image occludes
ground image

66
send image to
display for viewing

**Fig. 5**

Fig. 6

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/362190 A1 (ROYSTER HOWARD ISHAM [US] ET AL) 15 December 2016 (2016-12-15) * abstract * * * paragraph [0023] - paragraph [0025] * * paragraph [0038] * ----- | 1-14 | INV. G06T19/00 |
| A | US 2018/134382 A1 (SCHOLL NATHANIEL BLAKE [US] ET AL) 17 May 2018 (2018-05-17) * abstract * * * paragraph [0040] * ----- | 1-14 | |

TECHNICAL FIELDS
SEARCHED (IPC)

G06T

The present search report has been drawn up for all claims

| Place of search | Date of completion of the search | Examiner |
|---|---|---|
| Berlin | 8 July 2021 | González Arias, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 3 879 500 A1**

## ANNEX TO THE EUROPEAN SEARCH REPORT
## ON EUROPEAN PATENT APPLICATION NO.

EP 21 16 1629

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2021

| Patent document cited in search report | | Publication date | Patent family member(s) | | Publication date |
|---|---|---|---|---|---|
| US 2016362190 | A1 | 15-12-2016 | NONE | | |
| US 2018134382 | A1 | 17-05-2018 | US | 2018134382 A1 | 17-05-2018 |
| | | | US | 2021139142 A1 | 13-05-2021 |
| | | | WO | 2018089934 A1 | 17-05-2018 |

EPO FORM P0459

For more details about this annex : see Official Journal of the European Patent Office, No. 12/82